(19) Europäisches Patentamt
European Patent Office
Office européen des brevets

(11) **EP 4 033 399 B1**

(12) **FASCICULE DE BREVET EUROPEEN**

(45) Date de publication et mention de la délivrance du brevet:
**18.10.2023 Bulletin 2023/42**

(21) Numéro de dépôt: **21305088.3**

(22) Date de dépôt: **25.01.2021**

(51) Classification Internationale des Brevets (IPC):
*G06V 10/82* (2022.01)   *G06V 20/52* (2022.01)
*G06N 3/08* (2023.01)   *G06N 3/045* (2023.01)
*G06F 18/2413* (2023.01)   *H04W 4/029* (2018.01)
*G06F 18/25* (2023.01)

(52) Classification Coopérative des Brevets (CPC):
**H04W 4/029; G06F 18/24133; G06F 18/256;
G06N 3/045; G06N 3/08; G06V 20/53**

(54) **DISPOSITIF INFORMATIQUE ET PROCÉDÉ POUR L'ESTIMATION DE LA DENSITÉ D'UNE FOULE**

IT-GERÄT UND VERFAHREN ZUR SCHÄTZUNG DER DICHTE EINER MENSCHENMENGE

COMPUTER DEVICE AND METHOD FOR ESTIMATING THE DENSITY OF A CROWD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**27.07.2022 Bulletin 2022/30**

(73) Titulaire: **BULL SAS
78340 Les Clayes-sous-Bois (FR)**

(72) Inventeurs:
• **BENRACHI, Samia
13127 Vitrolles (FR)**
• **WENSINK, Emmanuel
3006 Bern (CH)**
• **CAVRON, Jérémy
56700 Kervignac (FR)**

(74) Mandataire: **IPAZ
Bâtiment Platon
Parc Les Algorithmes
91190 Saint-Aubin (FR)**

(56) Documents cités:
**CN-A- 111 274 340   US-A1- 2019 208 365**

• **MUHAMMAD WAQAR AZIZ ET AL: "Automated Solutions for Crowd Size Estimation", SOCIAL SCIENCE COMPUTER REVIEW., 11 septembre 2017 (2017-09-11), XP055491362, US ISSN: 0894-4393, DOI: 10.1177/0894439317726510**
• **SHALASH WAFAA M. ET AL: "A Mobile Based Crowd Management System", IJARCCE, vol. 6, no. 6, 30 juin 2017 (2017-06-30), pages 205-215, XP055821858, DOI: 10.17148/IJARCCE.2017.6638 Extrait de l'Internet: URL:https://ijarcce.com/upload/2017/june-17/IJARCCE%2038.pdf> [extrait le 2021-07-07]**
• **ZHANG YINGYING ET AL: "Single-Image Crowd Counting via Multi-Column Convolutional Neural Network", 2016 IEEE CONFERENCE ON COMPUTER VISION AND PATTERN RECOGNITION (CVPR), IEEE, 27 juin 2016 (2016-06-27), pages 589-597, XP033021234, DOI: 10.1109/CVPR.2016.70 [extrait le 2016-12-09]**
• **BAI HAOYUE ET AL: "Crowd Counting on Images with Scale Variation and Isolated Clusters", 2019 IEEE/CVF INTERNATIONAL CONFERENCE ON COMPUTER VISION WORKSHOP (ICCVW), IEEE, 27 octobre 2019 (2019-10-27), pages 18-27, XP033732520, DOI: 10.1109/ICCVW.2019.00009 [extrait le 2020-03-02]**

**Description**

L'invention s'intéresse au domaine de la surveillance, et plus particulièrement de la surveillance d'une foule d'individus, pouvant être utilisée notamment pour estimer la densité de ladite foule d'individus. L'invention concerne un procédé d'estimation de la densité d'une foule, ledit procédé permettant une estimation améliorée et ouvrant la voie à de nouvelles fonctionnalités d'interaction avec des individus particuliers au sein d'une foule. L'invention concerne en outre un dispositif configuré pour l'estimation de la densité d'une foule notamment à partir de données d'images.

**[Art antérieur]**

Depuis quelques années, le développement de villes « intelligentes » prend de plus en plus d'ampleur, notamment avec le déploiement des technologies de communication liées à la 4G et à la 5G. Ainsi, les places et les rues extérieures sont souvent équipées de caméras et les évènements regroupant de nombreuses personnes sont souvent filmés. Néanmoins, alors que le comptage de foule ou l'estimation de la densité de foule sont d'une grande importance pour surveiller les évènements ou comportements anormaux associés à une foule, le traitement des informations sur la foule n'est généralement pas efficacement appliqué.

La gestion de la foule dans des lieux de rassemblement devient de plus en plus critique. Cela est d'autant plus important lors des rassemblements massifs de personnes durant les manifestations sportives ou évènements sociaux culturels qui peuvent être à risque. En effet, le contexte actuel est empreint des risques associés à des débordements de foules comme ils sont connus depuis de nombreuses années, des risques d'attentat ou encore plus récemment des risques de dispersion d'agents pathogènes (e.g., Covid) au sein d'une foule plus ou moins dense, en mouvement et hétérogène. Cela devient d'autant plus critique en présence d'individus de nationalités différentes comme cela est notamment le cas lors d'événements ou sur des sites touristiques.

Des dispositifs de comptages comme le référencement manuel ou assisté par ordinateur dans un secteur bien défini sont déjà mis en place par les autorités ou les services spécialisés, mais le temps de comptage est lent et leurs estimations ont un taux d'erreur assez élevé. Dans des cas rares et exceptionnels, les autorités utilisent le comptage par laser sur un hélicoptère qui est très précis. Un tel dispositif de comptage est particulièrement difficile à mettre en place puisqu'il nécessite la présence de personnels qualifiés d'une part pour le pilotage de l'hélicoptère et d'autre part pour le maniement du laser. De plus, le comptage laser par hélicoptère reste peu adapté aux foules très denses. Enfin, ces dispositifs de comptage ne permettent pas l'identification de personnes parmi une foule, ce qui peut être particulièrement utile notamment pour détecter des personnes interdites de manifestation ou encore pour identifier des personnes responsables de dégradations lors de manifestations.

Ces dernières années, de nombreuses méthodes d'apprentissage par réseau de neurones, notamment par réseau de neurones convolutif, ont été proposées. En effet, depuis le succès significatif de l'apprentissage profond dans le traitement d'image, de nombreux auteurs ont introduit l'utilisation de réseau de neurones pour estimer la densité d'une foule.

Les algorithmes de comptage de foule existants ont de nombreuses limites telles qu'une grande dépendance à la technologie de segmentation d'image, une petite échelle de comptage une taille d'image d'entrée fixe et une réduction de la précision de comptage des images avec des arrière-plans complexes est très faible.

Pour effectuer de tels comptages, de nombreuses solutions ont vu le jour ces dernières années. Une solution de comptage de personnes dans une foule a notamment été développée par Wafaa M. Shalash et al 2017 (A mobile based crowd management system ; IJARCCE, Vol. 6, Issue 6, June 2017). Cette solution propose de déterminer le nombre de personnes au travers d'applications mobiles préalablement installées sur leur téléphone portable. D'autres techniques utilisent le domaine de l'imagerie, plus particulièrement l'utilisation d'images issues de flux vidéo. Les chercheurs Yingying Zhang, Desen Zhou, Siqin Chen, Shenghua Gao et Yi Ma 2016 (Single-Image Crowd Counting via Multi-Column Convolutional Neural Network ; 2016 IEEE Conférence on Computer Vision and Pattern Recognition (CVPR), Las Vegas, NV, 2016, pp. 589-597, doi: 10.1109/CVPR.2016.70) ont décrit une solution utilisant un réseau neuronal et des cartes de densités pour estimer le nombre de personnes par unité de pixel. Cette méthode permet d'améliorer l'estimation sur le comptage d'objets ou de personnes. Bien que ce type de reconnaissance puisse s'avérer efficace, lorsque la foule devient trop dense, l'estimation du nombre de personnes est peu fiable, car les personnes entassées ou se trouvant loin du dispositif ayant effectué la prise de l'image ne sont pas détectées. Afin de pallier à ces imprécisions et ainsi obtenir un comptage plus précis, Haoyue Bai et al. 2019 (Crowd Counting on Images with Scale Variation and Isolated Clusters ; 2019 IEEE/CVF International Conférence on Computer Vision Workshop (ICCVW)), propose une amélioration des méthodes utilisant le même procédé d'échelles à convolution différentes en y intégrant la variation d'échelle adaptative des foules pour extraire et comptabiliser les groupes isolés. Cette méthode permet de résoudre le problème d'échelle sur la profondeur de champ d'une image. Le document US2019/208365 A1 divulgue également un procédé de détection de densité de foule utilisant des dispositifs communicants mobiles.

Toutes ces solutions permettent d'améliorer la détection de personnes, notamment pour le comptage d'une foule, à l'aide d'images issues de caméras. Cependant, ces solutions restent tributaires de la configuration des personnes formant une foule, notamment les personnes ou objets cachés derrière un obstacle ou bien, lorsque la foule est particulièrement dense et que les personnes forment un amas ne permettant pas de distinguer une ou plusieurs personnes les unes des autres. Ainsi, il existe un besoin pour une solution permettant de déterminer avec plus de justesse le nombre de personnes présentes dans une foule à partir d'images capturées par un dispositif de surveillance telle qu'une caméra.

**[Problème technique]**

L'invention a pour but de remédier aux inconvénients de l'art antérieur.

En particulier, l'invention a pour but de proposer un procédé d'estimation de la densité d'une foule, ledit procédé présentant une justesse améliorée. L'invention a en outre pour but de proposer un dispositif pour l'estimation de la densité d'une foule.

**[Brève description de l'invention]**

À cet effet, l'invention porte sur un procédé d'estimation de la densité d'une foule utilisant des dispositifs communicants mobiles, mis en oeuvre par un dispositif informatique, ledit procédé comprenant l'utilisation d'un réseau de neurones multiéchelles entrainé pour produire une carte de densité de la foule, ledit réseau de neurones multiéchelles entrainé comprenant au moins deux sous réseaux de neurones, ledit procédé comportant les étapes suivantes :

- Réception d'au moins une image d'entrée générée par un dispositif de capture d'image comportant la foule dont la densité est à estimer ;

- Traitement de l'image d'entrée, par au moins un sous réseau de neurones du réseau de neurones multiéchelles entrainé, ledit traitement comportant l'utilisation de plusieurs filtres d'échelles différents de façon à obtenir au moins une matrice correspondant au traitement de l'image d'entrée à différentes échelles ;

- Acquisition d'un masque d'identification comportant des données d'identification des dispositifs communicants mobiles positionnées en fonction de coordonnées spatiales desdits dispositifs communicants mobiles ;

- Traitement du masque d'identification, par au moins un sous réseau de neurones du réseau de neurones multiéchelles entrainé, de façon à obtenir au moins une matrice correspondant au traitement des données d'identification des dispositifs communicants mobiles ; et

- Fusion, par le réseau de neurones multiéchelles entrainé, de l'au moins une matrice correspondant au traitement de l'image d'entrée et de l'au moins une matrice correspondant au traitement des données d'identification de dispositifs communicants mobiles de façon à obtenir une carte de densité de la foule dont la densité est à estimer.

Le procédé selon l'invention permet d'améliorer l'estimation de comptage d'une foule et notamment de mieux prendre en compte des personnes potentiellement masquées par des obstacles. En outre, le procédé selon l'invention permet d'obtenir des estimations correctes de comptage même lorsque la profondeur de champ de l'image est élevée.

Le procédé selon l'invention repose notamment sur l'utilisation de plusieurs sources de données et il permet de produire une carte de densité d'une foule à partir notamment d'une image et de données d'identification ou d'un masque d'identification.

Ici, l'utilisation de données multi-sources de natures différentes, permet, notamment grâce à une prise en compte de plusieurs échelles, d'améliorer l'estimation de comptage d'une foule. Dans un procédé selon l'invention, l'utilisation de plusieurs sous-réseaux de neurones permet de diviser l'apprentissage en plusieurs sous-modèles où chaque sous-modèle va apprendre certaines caractéristiques qui seront ensuite fusionnées pour obtenir la carte de densité.

La prise en compte du masque d'identification peut également permettre de faire une corrélation entre des paramètres calculés relatifs à la foule (mouvements brusques, trop forte proximité ...) et des identifiants de dispositifs communicants mobiles. Cela permet de rapidement déterminer à quels dispositifs communicants mobiles envoyer des informations.

**Selon d'autres caractéristiques optionnelles du procédé, ce dernier peut inclure facultativement une ou plusieurs des caractéristiques suivantes, seules ou en combinaison :**

- l'acquisition du masque d'identification comporte les étapes suivantes :

- Réception de données d'identification de dispositifs communicants mobiles acquises par au moins un capteur réseau ;

- Calcul de la position des dispositifs communicants mobiles à partir de données de communication provenant de l'au moins un capteur réseau ;

- Réception de valeurs de position du dispositif de capture d'image, par exemple de valeurs de distance entre le dispositif de capture d'image et le ou les capteurs réseau ;

- Transposition de la position calculée des dispositifs communicants mobiles sur un référentiel spatial correspondant à l'image d'entrée, en fonction des valeurs de distances reçues ; et

- Génération du masque d'identification comportant les données d'identification des dispositifs communicants mobiles positionnées en fonction de la position calculée desdits dispositifs communicants mobiles.

La génération du masque d'identification permet de mieux en contrôler ses paramètres de constitution. Comme cela est présenté, un masque d'identification selon l'invention comportera les données d'identification des dispositifs communicants mobiles et ces données seront positionnées en fonction de la position calculée desdits dispositifs communicants mobiles. En particulier, ces données seront positionnées dans un référentiel correspondant au référentiel de l'image d'entrée.

- l'acquisition du masque d'identification comporte une réception, par le dispositif informatique, du masque d'identification. Alternativement, le procédé peut comporter la réception du masque d'identification. Le masque peut alors avoir été généré au niveau d'un ou des capteurs réseau.

- le réseau de neurones multiéchelles entrainé est un réseau de neurones convolutif entrainé comportant au moins une couche de traitement convolutif dédiée au traitement de l'image d'entrée et au moins une couche de traitement convolutif dédiée au traitement du masque d'identification. La combinaison d'au moins deux traitements convolutif sur des sources de données différentes permet d'améliorer le comptage.

- le réseau de neurones comporte au moins trois couches de traitement convolutif dédiée au traitement de l'image d'entrée. Comme cela sera présenté dans les exemples, l'utilisation d'au moins trois couches de traitement convolutif dédiée au traitement de l'image d'entrée génère de bons résultats.

- chaque couche de traitement convolutif comporte des étapes de convolution, des étapes de compression (pooling) et des étapes de correction (ReLu).

- il comporte une étape de détermination d'une quantité de personnes à partir de la carte de densité de la foule. Le procédé, au-delà de la génération d'une carte de densité, peut comporter des étapes d'analyses fournissant des données à haute valeur ajoutée pour la surveillance d'une foule. La quantité de personnes pourra correspondre à la quantité de personnes dans la foule dans l'image, mais également des quantités de personnes en fonction de zones particulières représentées dans l'image.

- il comporte une étape d'identification d'une augmentation brusque de la densité de personnes en fonction du temps dans au moins une partie de l'image. Le procédé permet alors d'alerter sur un risque pour les personnes constituant la foule. Par exemple, le procédé selon l'invention pourra être configuré pour identifier une augmentation brusque de la densité par la comparaison d'une accélération de la variation de la densité et la comparer à une valeur prédéterminée d'accélération maximale. Alternativement, il pourra être configuré pour comparer une valeur de densité calculé ou estimée à une valeur prédéterminée maximale.

- il comporte une étape d'identification d'au moins une partie de l'image dans laquelle une distance de sécurité prédéterminée entre individus n'est pas respectée. Ainsi, le procédé peut identifier une zone à risque de transmission de virus.

- il comporte une étape de détermination d'une quantité de personnes en fonction de la nationalité de l'opérateur des dispositifs communicants mobiles utilisés. En effet, grâce à la prise en compte des données d'identification des dispositifs communicants mobiles, de nouvelles données sont disponibles et peuvent être analysées.

- il comporte une étape d'identification de dispositifs communicants mobiles associés à une circonstance prédéterminée et une étape de transmission de données d'identification de ces dispositifs communicants mobiles à un client tiers. À partir de données d'identification, de la carte de densité et d'analyses complémentaires, le procédé selon l'invention peut identifier des dispositifs communicants mobiles associés par exemple à des situations à risque. Ainsi, le procédé peut avantageusement comporter une transmission de données pouvant directement ou indirectement être réceptionnées par un dispositif communicant mobile de façon à en alerter son utilisateur.

- il comporte une étape d'apprentissage pour l'entrainement du réseau de neurones multiéchelles incluant une rétropropagation d'un gradient d'erreur et une descente de gradient. Cela permet d'améliorer la justesse de l'estimation.

D'autres mises en oeuvre de cette invention comprennent des systèmes informatiques, des appareils et des programmes informatiques correspondants enregistrés sur un ou plusieurs dispositifs de stockage informatiques, chacun étant configuré pour effectuer les actions d'un procédé selon l'invention. En particulier, un système d'un ou de plusieurs ordinateurs peut être configuré pour effectuer des opérations ou des actions particulières, notamment un procédé selon l'invention, grâce à l'installation d'un logiciel, micrologiciel, matériel ou d'une combinaison de logiciels, micrologiciels ou matériel installé sur le système. En outre, un ou plusieurs programmes informatiques peuvent être configurés pour effectuer des opérations ou des actions particulières grâce à des instructions qui, lorsqu'elles sont exécutées par un appareil de traitement de données, obligent l'appareil à effectuer les actions.

Ainsi, l'invention porte en outre sur un produit programme d'ordinateur comprenant des instructions de code de programme permettant l'exécution des étapes d'un procédé selon l'invention lorsque ledit produit programme d'ordinateur est exécuté sur un dispositif informatique.

L'invention porte en outre sur un dispositif informatique pour l'estimation de la densité d'une foule utilisant des dispositifs communicants mobiles, ledit dispositif informatique comportant un ou plusieurs processeurs configurés pour utiliser un réseau de neurones multiéchelles entrainé pour produire une carte de densité de la foule à partir d'une image, ledit réseau de neurones multiéchelles entrainé comprenant au moins deux sous réseau de neurones, lesdits un ou plusieurs processeurs étant configurés pour :

- Réceptionner au moins une image d'entrée comportant la foule dont la densité est à estimer ;

- Traiter l'image d'entrée, par au moins un sous réseau de neurones du réseau de neurones multiéchelles entrainé, le traitement comportant l'utilisation de plusieurs filtres d'échelles différents de façon à obtenir au moins une matrice correspondant au traitement de l'image d'entrée à différentes échelles ;

- Acquérir un masque d'identification comportant des données d'identification des dispositifs communicants mobiles positionnées en fonction de coordonnées spatiales desdits dispositifs communicants mobiles ;

- Traiter le masque d'identification, par au moins un sous réseau de neurones du réseau de neurones multiéchelles entrainé, de façon à obtenir au moins une matrice correspondant au traitement des données d'identification des dispositifs communicants mobiles ; et

- Fusionner, à partir du réseau de neurones multiéchelles entrainé, l'au moins une matrice correspondant au traitement de l'image d'entrée et de l'au moins une matrice correspondant au traitement des données d'identification de dispositifs communicants mobiles de façon à obtenir la carte de densité de la foule dont la densité est à estimer.

D'autres avantages et caractéristiques de l'invention apparaitront à la lecture de la description suivante donnée à titre d'exemple illustratif et non limitatif, en référence aux Figures annexées :

La figure 1 représente une illustration d'un environnement dans lequel un dispositif informatique selon l'invention peut être mis en oeuvre.

La figure 2 représente un mode de réalisation d'un procédé d'estimation de la densité d'une foule selon l'invention. Les étapes encadrées par des pointillés sont facultatives.

La figure 3 représente un mode de réalisation d'une étape d'acquisition d'un masque d'identification selon l'invention.

La figure 4 représente une illustration de la structure d'un réseau de neurones multiéchelles selon un mode de réalisation de l'invention.

La figure 5 représente une illustration de la structure d'un réseau de neurones multiéchelles selon un mode de réalisation de l'invention dans lequel trois sous réseau de neurones traitent l'image d'entrée et un sous-réseau traite le masque d'identification.

La figure 6 représente une illustration de la structure d'un réseau de neurones multiéchelles selon un mode de réalisation de l'invention dans lequel un sous-réseau de neurones traite l'image d'entrée sur plusieurs échelles et un sous-réseau traite le masque d'identification.

Des aspects de la présente invention sont décrits en référence à des organigrammes et/ou à des schémas fonctionnels de procédés, d'appareils (systèmes) et de produits de programme informatique (ou programme d'ordinateur) selon des modes de réalisation de l'invention. Sur les figures, les organigrammes et les schémas fonctionnels illustrent l'architecture, la fonctionnalité et le fonctionnement d'implémentations possibles de systèmes, de procédés et de produits de programme informatique selon divers modes de réalisation de la présente invention. À cet égard, chaque bloc dans les organigrammes ou blocs-diagrammes peut représenter un système, un dispositif, un module ou un code, qui comprend une ou plusieurs instructions exécutables pour mettre en oeuvre la ou les fonctions logiques spécifiées. Dans certaines implémentations, les fonctions associées aux blocs peuvent apparaitre dans un ordre différent par rapport à celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et/ou de l'organigramme, et des combinaisons de blocs dans les schémas de principe et/ou l'organigramme, peuvent être mis en oeuvre par des systèmes matériels spéciaux qui exécutent les fonctions ou actes spécifiés ou effectuer des combinaisons de matériel spécial et d'instructions informatiques.

**[Description de l'invention]**

Au sens de l'invention, le terme « **foule** », peut correspondre à un rassemblement de personnes dans un même lieu. Ainsi, cela peut correspondre à un ensemble de personnes se déplaçant dans une rue ou dans un bâtiment, mais aussi à un ensemble de personnes sensiblement stationnaire, par exemple assistant à une représentation. Une foule, de façon générale, correspondra à un nombre de personnes supérieur à dix, de préférence supérieur à vingt, de façon préférée supérieur à cinquante et de façon encore plus préférée supérieure à cent.

Au sens de l'invention, le terme « **apprentissage** », peut correspondre à un procédé permettant de calculer une valeur de Y à partir d'une base de n observations labélisées (X1...n, Y1...n) ou non labélisées (X1...n). L'apprentissage peut être dit supervisé lorsqu'il se base sur des observations labélisées et non supervisé lorsqu'il se base sur des observations non labélisées. Dans le cadre de la présente invention, l'apprentissage est avantageusement utilisé pour la calibration du procédé et donc son adaptation à différentes images ou situations.

Au sens de l'invention, l'expression « **réseau de neurones** », aussi appelée réseau de neurones artificiels, peut correspondre à un agencement logiciel et/ou matériel permettant la résolution de problèmes complexes tels que la reconnaissance des formes, grâce à l'ajustement de coefficients de pondération dans une phase d'apprentissage. Un réseau de neurones pourra inclure plusieurs sous réseau de neurones dont les résultats sont fusionnés.

Un « **réseau de neurones multiéchelle** » pourra ainsi correspondre à un agencement logiciel et/ou matériel permettant la résolution de problèmes complexes et incorporant l'utilisation de filtres, par exemple de convolution, de différentes tailles pour extraire des caractéristiques locales.

Un « **réseau de neurones entrainé** » correspond de préférence à un agencement logiciel et/ou matériel dont le fonctionnement a été paramétré de façon à pouvoir prédire des valeurs de paramètres à partir d'une ou de plusieurs données d'entrée.

Au sens de l'invention, l'expression « **carte de densité** » peut correspondre à une représentation illustrant la position estimée des individus composant la foule associée à une image d'entrée. Elle peut également correspondre à une carte comportant une valeur de densité d'individu en fonction de la position sur la carte.

L'expression « **dispositif communicant mobile** », au sens de l'invention peut correspondre à un objet électronique connecté, par une connexion filaire ou sans fil, à un réseau de transport de données, de manière que l'objet connecté puisse partager des données avec un autre objet connecté, un serveur, un ordinateur fixe ou mobile, une tablette électronique, un smartphone ou tout autre dispositif connecté d'un réseau donné. De manière connue en soi, de tels objets connectés peuvent être, par exemple, des montres, des lunettes, des tablettes, des ordinateurs portables ou encore des smartphones.

L'expression « **dispositif informatique** » au sens de l'invention correspond à une ou plusieurs structures informatiques aptes à faire fonctionner une application ou une chaine applicative. Ainsi, le dispositif informatique peut correspondre à un ensemble d'éléments comportant un processeur, une interface de communication et de la mémoire. L'expression « **infrastructure informatique** » au sens de l'invention correspond à un ensemble de structures informatiques (c.-à-d. dispositifs informatiques) apte à faire fonctionner une application ou une chaine applicative. L'infrastructure informatique peut être un ou plusieurs serveurs.

On entend par « **traiter** », « **calculer** », « **déterminer** », « **afficher** », « **extraire** » « **comparer** » ou plus largement « **opération exécutable** », au sens de l'invention, une action effectuée par un dispositif ou un processeur sauf si le contexte indique autrement. À cet égard, les opérations se rapportent à des actions et/ou des processus d'un système de traitement de données, par exemple un système informatique ou un dispositif informatique électronique, tel qu'un ordinateur, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « **application** », « **logiciel** », « **code de programme** », et « **code exécutable** » signifient tout code, expression, ou notation, d'un ensemble d'instructions destinées à provoquer un traitement de données pour effectuer une fonction particulière directement ou indirectement (p. ex. après une opération de conversion vers un autre code). Les exemples de code de programme peuvent inclure, sans s'y limiter, un sous-programme, une fonction, une application exécutable, un code source, un code objet, une bibliothèque et/ou toute autre séquence d'instructions conçues pour l'exécution sur un système informatique.

On entend par « **processeur** », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « **couplé** », au sens de l'invention, connectée, directement ou indirectement avec un ou plusieurs éléments intermédiaires. Deux éléments peuvent être couplés mécaniquement, électriquement ou liés par un canal de communication.

L'expression « **interface homme-machine** » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

Dans la suite de la description, les mêmes références sont utilisées pour désigner les mêmes éléments. En outre, les différentes caractéristiques présentées et/ou revendiquées peuvent être avantageusement combinées. Leur présence dans la description ou dans des revendications dépendantes différentes n'exclut pas cette possibilité.

Comme cela a été présenté, la demanderesse a identifié un besoin dans l'estimation de la densité d'une foule. En effet, malgré la multiplication des méthodes et l'utilisation de plus en plus fréquente de réseau de neurones dont des réseaux de neurones multiéchelles ou convolutifs, les estimations pouvaient encore être améliorées notamment lors de la présence d'obstacles ou une profondeur de champ importante.

Les inventeurs ont proposé une nouvelle solution intégrant dans un réseau de neurones multiéchelles, l'utilisation d'une image d'entrée et d'un masque d'identification chacun faisant l'objet d'un traitement, de préférence indépendant et convolutif, puis d'une fusion pour générer une carte de densité à la justesse améliorée comme cela sera présenté dans les exemples.

Ainsi, **selon un premier aspect,** l'invention porte sur **un procédé 1 d'estimation de la densité d'une foule.** Un tel procédé, développé par la demanderesse, utilise un réseau de **neurones multiéchelles** entrainé et il permet de produire une carte de densité d'une foule à partir notamment d'une image et d'un masque d'identification.

En particulier, le réseau de neurones **multiéchelles** entrainé utilisé dans le cadre de la présente invention comprend au moins deux réseaux de neurones parallèles. Ainsi, il peut aussi être appelé réseau de neurones multiéchelles multicolonnes.

Comme cela sera détaillé, l'invention peut être mise en oeuvre sur tout dispositif informatique configuré pour pouvoir accéder à des images comportant une foule dont une densité est à estimer et un masque d'identification ou à défaut des données d'identification de dispositifs communicants mobiles.

L'invention sera décrite dans le cadre d'un dispositif informatique de type serveur informatique configuré pour estimer la densité d'une foule. Toutefois, l'invention ne se limite pas à ce cadre et peut trouver d'autres applications dans d'autres cadres tels que des surveillances de lieux ou de passage ou même d'autres domaines.

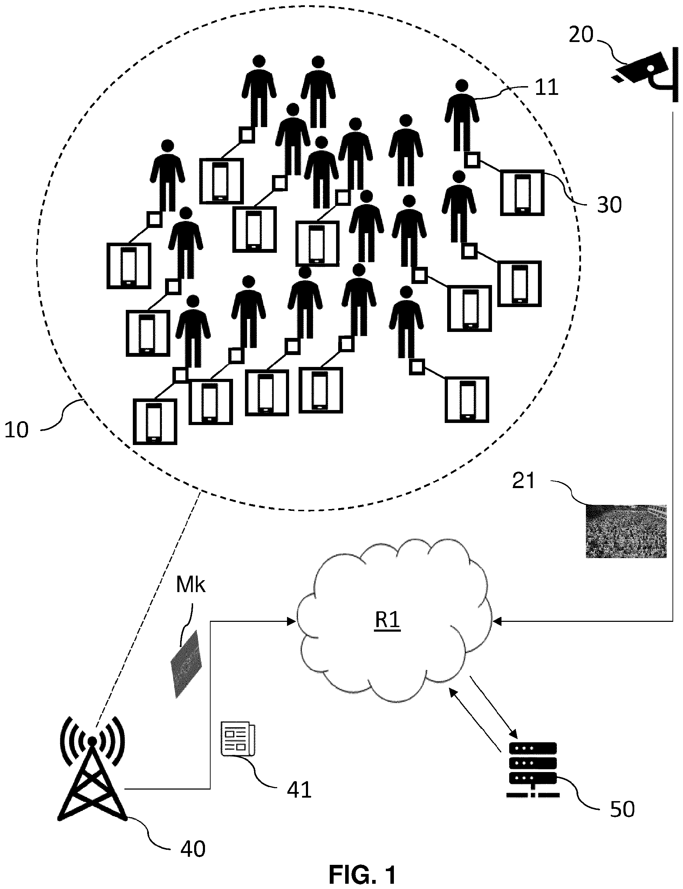

Comme cela est présenté à la **figure 1,** l'invention peut être mise en oeuvre pour estimer la densité d'une foule 10 composée d'une pluralité d'individus 11. Ces individus pourront pour certains d'entre eux posséder un ou plusieurs dispositifs communicants mobiles 30. La foule 10 fera généralement l'objet d'une surveillance vidéo réalisée par exemple par l'intermédiaire de dispositifs de capture d'image 20 tels que des caméras.

Les dispositifs de capture d'image 20 peuvent correspondre à tous les dispositifs capables d'enregistrer et de transmettre une image. Par exemple, les dispositifs de capture d'image 20 sont sélectionnés parmi : des appareils photographiques, des caméras pour le visible, des caméras thermiques infrarouges, des caméras bispectrales, des caméras 3D et/ou des caméras embarquées sur des drones. Avantageusement, les dispositifs de capture d'image 20 comportent des caméras 3D, capables de scruter une zone à 360°.

Les dispositifs de capture d'image 20 pourront donc générer une pluralité d'images transmises, par exemple par un réseau de communication R1 de type internet à un dispositif informatique 50 qui aura par exemple été configuré pour mettre en oeuvre au moins une partie du procédé d'estimation de densité selon l'invention.

Comme cela est illustré à la figure 1, la présente invention pourra bénéficier de la présence d'un capteur réseau 40, par exemple un intercepteur d'IMSI.

Ainsi, les capteurs réseau sont avantageusement aptes à acquérir un ensemble d'informations sur les dispositifs électroniques communicants se trouvant à leur portée. Les informations acquises peuvent par exemple correspondre à : une donnée d'adresse MAC (« Media Access Control » terminologie anglo-saxonne), à une donnée d'IMEI (« International Mobile Equipment Identity », terminologie anglo-saxonne), à un identifiant de fournisseur d'accès au réseau GSM (« Global System for Mobile Communications », terminologie anglo-saxonne), la base de réception CID (Cell ID en terminologie anglosaxonne) ou encore la puissance du signal.

Comme cela sera détaillé par la suite, le capteur réseau sera avantageusement configuré pour transmettre des données d'identification 41 ou un masque d'identification Mk au dispositif informatique 50, par exemple via le réseau de communication R1 de type internet.

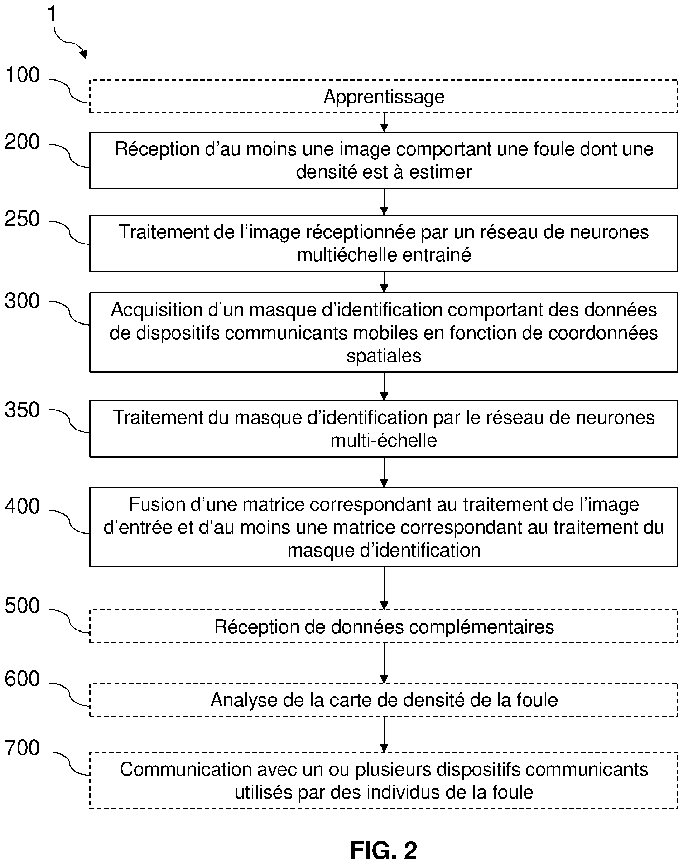

Comme cela est présenté à la **figure 2,** le procédé selon l'invention comporte une réception 200 d'au moins une image comportant une foule dont une densité est à estimer, un traitement 250 de l'image réceptionnée par un réseau de neurones multiéchelles entrainé, une étape d'acquisition 300 d'un masque d'identification comportant les données de dispositifs communicants en fonction de coordonnées spatiales, un traitement 350 du masque d'identification par le réseau de neurones multiéchelles entrainé et une étape de fusion 400 d'au moins une matrice correspondant au traitement de l'image d'entrée 21 et d'au moins une matrice correspondant au traitement du masque d'identification de façon à obtenir une carte de densité de la foule dont la densité est à estimer.

Ces étapes permettent de générer une carte de densité de la foule présentant une justesse supérieure à une carte générée seulement à partir de données d'images.

En outre, comme illustré à la figure 1, le procédé selon l'invention peut également comporter :

- une étape d'apprentissage 100 pour l'entrainement du réseau de neurones multiéchelles ;
- Une étape de réception 500 de données complémentaires ;
- Une étape d'analyse 600 de la carte de densité de la foule ;
- Une étape de communication 700 avec un ou plusieurs dispositifs communicants utilisés par des individus de la foule.

Ainsi, le procédé d'estimation de la densité d'une foule selon l'invention peut débuter par **une étape d'apprentissage 100** pour l'entrainement du réseau de neurones multiéchelle. L'étape d'apprentissage 100 est généralement basée au moins en partie sur les principes généraux des mathématiques statistiques.

L'étape d'apprentissage 100 peut débuter par un prétraitement des données d'entrées telles que les images d'entrée 21 ou les données d'identification 41 de façon à en faciliter l'exploitation ultérieure. Un prétraitement selon l'invention peut par exemple comporter : une normalisation des données, un rééchantillonnage, une agrégation de données, et/ou un recodage des variables.

L'utilisation dans le cadre de l'invention d'un apprentissage supervisé est préférée. Parmi les méthodes d'apprentissage supervisées, les réseaux de neurones, les arbres de classification, la recherche des plus proches voisins ou les arbres de régression sont parmi les techniques d'apprentissage automatique les plus robustes et les plus efficaces dans le cadre d'un procédé selon l'invention. Ici, des résultats particulièrement proches des valeurs attendues ont été obtenus lors de la mise en oeuvre de réseaux de neurones et en particulier de réseau de neurones multiéchelles. Ainsi, l'étape d'apprentissage pourra comporter un entrainement d'un modèle de type réseau de neurones multiéchelles avec des images d'entrée, des masques d'identification et des cartes de densité de référence.

Le réseau de neurones peut donc nécessiter un entrainement à la génération d'une carte de densité de foule estimée à partir d'une image d'entrée 21 couplée à des données d'identification 41. Ainsi, l'étape d'apprentissage 100 pourra comporter l'importation d'une image d'entrée de référence et d'une carte de densité annotée correspondant à l'image d'entrée de référence. Une carte de densité annotée pourra par exemple correspondre à une carte comportant en deux dimensions ou en trois dimensions un marquage par individu 11 par exemple au niveau de la tête d'une personne. Chaque pixel pourra en particulier être annoté.

Dans le cadre du procédé selon l'invention, le réseau de neurones pourra comporter des couches de traitement incluant des étapes de convolution, des étapes de compression (« pooling » en terminologie anglo-saxonne) et des étapes de correction (« ReLu » en terminologie anglo-saxonne). Avantageusement, plusieurs colonnes comporteront des étapes successives de convolution, compression, convolution, compression avec des tailles de filtres différentes. La fonction d'activation la plus adaptée au CNNs est une fonction ReLU (en terminologie anglo-saxonne « Rectified Linear Unit »).

Une fois qu'une étape de traitement est terminée (c'est-à-dire une époque), la moyenne des résultats de toutes les colonnes est effectuée puis une carte de densité est générée. Une fonction mesure les distances euclidiennes pour estimer le nombre de personnes sur l'image. Le résultat est comparé au résultat réel attendu par la fonction de perte suivante :

$$L(\theta) = \frac{1}{2N} \sum_{i=1}^{N} \| F(X_i \, ; \, \theta) - F_i \|_2^2$$

Θ est le paramètre d'apprentissage dans le MCNN. N est le nombre d'entrainements des images d'entrainements. Xi est l'image d'entrée et Fi est le résultat (sous forme de densité) réel de l'image d'entrée.

À l'issue de l'estimation, une fonction de rétropropagation et de descente de gradient va permettre de modifier simultanément les paramètres (poids) du réseau de neurones pour corriger le modèle et permettre une meilleure estimation au prochain tour d'entrainement.

De façon préférée, l'étape d'apprentissage 100 comporte une rétropropagation d'un gradient d'erreur. En effet, il a été montré que la rétropropagation du gradient de l'erreur permet, dans un processus d'entrainement itératif, un meilleur ajustement des paramètres du réseau de neurones selon l'invention et donc de meilleurs résultats de prédiction.

En outre, l'étape d'apprentissage 100 peut comporter une étape de mise en oeuvre d'un algorithme de descente de gradient. La descente de gradient pourra être une descente de gradient stochastique. De préférence, la méthode de descente de gradient aléatoire est utilisée pour mettre à jour un paramètre étudié à chaque itération de l'apprentissage ou de l'optimisation.

En particulier, un procédé d'estimation de la densité d'une foule selon l'invention comportera l'entrainement d'un réseau de neurones convolutif entrainé comportant au moins une couche de traitement convolutif dédiée au traitement 250 de l'image d'entrée 21 et au moins une couche de traitement convolutif dédiée au traitement 350 du masque d'identification Mk.

En effet, comme cela sera détaillé par la suite, la présente invention bénéficie largement de l'utilisation de réseaux de neurones multiéchelles. En effet, un réseau de neurones multiéchelles permet par un jeu de filtres différents de gérer avec plus de précision la profondeur de champ.

Ainsi, avantageusement le traitement 250 de l'image sera réalisé par un ou plusieurs réseaux de neurones multi échelles entrainés et le traitement 350 du masque d'identification Mk sera réalisé par un ou plusieurs réseaux de neurones entrainés, différent du ou des réseaux de neurones dédiés au traitement des images.

Comme illustré aux figures 1 et 2, le procédé 1 d'estimation de la densité d'une foule 10 selon l'invention comporte **une étape de réception 200 d'une image d'entrée 21 comportant une foule dont une densité est à estimer.** L'étape de réception 200 peut être réalisée par tout dispositif de communication permettant un échange de données direct ou indirect avec le dispositif de capture d'image 20.

L'image d'entrée peut être par exemple être représentée sous la forme d'une matrice de pixels à un canal pour une image en niveau de gris ou à trois canaux pour une image en couleur.

Le procédé 1 d'estimation de la densité d'une foule 10 selon l'invention peut comporter **une étape d'acquisition 300 d'un masque d'identification Mk.** Le masque d'identification Mk comporte avantageusement des données d'identification de dispositifs communicants mobiles positionnées au sein du masque d'identification Mk en fonction des coordonnées spatiales des dispositifs communicants mobiles 30.

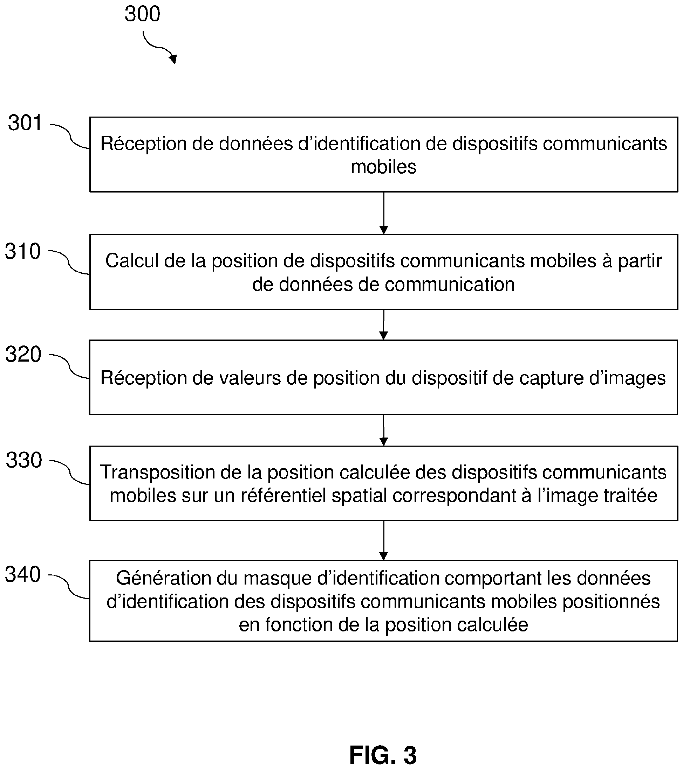

Comme cela est illustré à la **figure 3,** le procédé selon l'invention pourra comporter une étape de réception 301 de données d'identification 41 de dispositifs communicants mobiles 30. Ces données d'identification peuvent avoir été acquises par au moins un capteur réseau 40.

Un capteur réseau 40 utilisable dans le cadre de la présente invention sera en particulier apte à exploiter des réseaux de communication sans fil tels que GSM ou tout protocole soumis à des standards 3GPP, Bluetooth et wifi.

Un capteur réseau, apte à acquérir des données d'identification pourra par exemple correspondre à une balise multi-protocole (« beacon » en terminologie anglosaxonne), à un intercepteur d'IMSI (« International Mobile Subscriber Identity » en terminologie anglo-saxonne), à un transpondeur wifi ou Bluetooth®, à une antenne relai, ou encore à une station de base.

De façon préférée, les données d'identification de dispositifs communicants mobiles 30 seront obtenues à partir d'antennes des opérateurs téléphoniques ou d'intercepteur mono ou multi-protocole tel qu'un intercepteur d'IMSI.

Les données d'identification pourront avantageusement comporter les identifiants des abonnés internationaux (IMSI). En outre, ces données d'identification pourront également comporter un identifiant de l'équipement, un identifiant du client de type MSISDN (« Mobile Station ISDN Number » en terminologie anglo-saxonne), une information par rapport au réseau par exemple de type CELL ID ou Secteur ID.

En outre, de façon préférée, ces données d'identification pourront être associées à des données sur la position du dispositif communicant mobile ou encore la puissance du signal émis (ou reçu par l'antenne en question).

Le procédé selon l'invention pourra en outre comporter une étape de calcul 310 de la position de dispositifs communicants. Il existe de nombreuses méthodes pour déterminer les coordonnées spatiales d'un dispositif communicant mobile.

L'étape de calcul 310 peut utiliser en données d'entrée des données de communication des dispositifs communicants mobiles 30 telles que la puissance du signal reçu par un ou plusieurs capteurs réseaux 40. Il peut également utiliser des identifiants des identifiants secteurs d'une ou de plusieurs antennes.

Les coordonnées spatiales pourront par exemple être déterminées à partir d'une triangulation des signaux desdits dispositifs communicants. Ainsi, le procédé selon l'invention peut comporter l'utilisation d'une triangulation par exemple à partir de l'intensité des signaux reçus par le ou les secteurs ayant reçu le signal (notamment dans le cas de 4G ou 5G).

Ainsi, le masque d'identification Mk peut être calculé à partir des données de puissance et/ou de secteur transmises par le ou les capteurs réseaux impliqués dans la collecte des données d'identification.

En outre, le procédé selon l'invention pourra comporter une étape de réception 320 de valeurs correspondant à la position du dispositif de capture d'image. La position du dispositif de capture d'image peut être une position dans le référentiel terrestre mais également une position relative (e.g. par rapport au(x) capteurs réseau). Par exemple, le procédé selon l'invention pourra comporter une étape de réception 320 de valeurs de distances entre le dispositif de capture d'image 20 et le ou les capteurs réseau 40. Ces valeurs de distances comportent de préférence des valeurs de position du dispositif de capture d'image 20 et du ou des capteurs réseau 40. Par exemple, ces valeurs de distances pourront correspondre à des distances entre le dispositif de capture d'image 20 et le ou les capteurs réseau 40 ainsi qu'à des valeurs d'orientation.

Ces valeurs de distances permettent de reconstruire le positionnement des éléments (i.e. dispositif de capture d'image 20 et capteur réseau 40) les uns par rapport aux autres, notamment lorsque plusieurs capteurs réseau 40 sont utilisés. Cela permet donc d'établir une position relative du dispositif de capture d'image 20 et du ou des capteurs réseau 40.

Le procédé selon l'invention pourra comporter une étape de transposition 330 de la position calculée des dispositifs communicants mobiles 30. Cette transposition peut être réalisée de préférence sur un référentiel spatial correspondant à l'image d'entrée 21.

L'étape de transposition 330 de la position calculée des dispositifs communicants mobiles 30 permet de positionner les données d'identification des dispositifs communicants mobiles 30 dans un référentiel 2D par exemple sur l'image d'entrée 21. Elle prend avantageusement en considération les valeurs de distances entre le dispositif de capture d'image 20 et le ou les capteurs réseau. Avantageusement la prise en compte de la position du capteur réseau 40 par rapport au dispositif de capture d'image 20 permet de faire correspondre des données de position de dispositifs communicants mobile à des pixels de l'image d'entrée 21.

En particulier, l'étape de transposition prend en compte des paramètres spatiaux du capteur réseau 40. Les paramètres spatiaux du capteur réseau 40 pourront notamment inclure la position spatiale et la ou les orientations du ou des secteurs du capteur réseau 40.

En outre, l'étape de transposition pourra prendre en compte des paramètres spatiaux du dispositif de capture d'image 20. Les paramètres spatiaux du dispositif de capture d'image 20 pourront notamment comporter la position spatiale et l'orientation du ou des secteurs du dispositif de capture d'image 20. En outre, lorsqu'une caméra rotative est utilisée, les paramètres spatiaux prendront avantageusement en considération la rotation de la caméra pour la mise à jour du repère.

Le positionnement des données d'identification pourra être réalisé dans un référentiel tridimensionnel ou dans un référentiel plan. En outre, ces données pourront être projetées dans un référentiel dédié ou sur l'image d'entrée 21.

Lors de l'étape de transposition, le repère de la caméra sera avantageusement utilisé comme référence puis une transposition des données d'identification 41, telle qu'une transformation projective, sera calculée entre le repère du capteur réseau 40 et celui du dispositif de capture d'image 20.

Ainsi les différentes sources de données (caméras, capteurs réseau) sont alignées dans un même référentiel correspondant de préférence à une image d'entrée 21.

Enfin, le procédé selon l'invention pourra comporter une étape de génération 340 d'un masque d'identification comportant des données d'identification de dispositifs communicants mobiles 30 en fonction de coordonnées spatiales dans le référentiel de l'image d'entrée 21. Un tel masque d'identification peut alors présenter une position estimée de dispositifs communicants mobiles 30 en 2D ou en 3D. Le masque d'identification pourra comporter des informations ou des identifiants associés à chacun dispositifs communicants mobiles 30 identifiés.

Cette génération est avantageusement réalisée en fonction des coordonnées spatiales desdits dispositifs communicants. Les coordonnées spatiales peuvent par exemple correspondre à des données de positionnement de type GNSS transmises avec les données d'identification. Alternativement, les coordonnées spatiales ont été calculées dans le cadre du procédé selon l'invention.

Les étapes associées à l'acquisition 300 d'un masque d'identification Mk pourront être individuellement ou conjointement réalisées au niveau du dispositif informatique 50.

Alternativement elles pourront être réalisées individuellement ou conjointement en amont de l'envoi de donnée à l'infrastructure informatique, par exemple au niveau du site où la foule est étudiée.

Le procédé 1 d'estimation de la densité d'une foule 10 selon l'invention comporte **un traitement 250 de l'image réceptionnée, par un réseau de neurones multiéchelles entrainé.** Le traitement 250 de l'image réceptionnée peut être réalisé par tout dispositif informatique comportant un ou plusieurs processeurs.

Le traitement 250 de l'image réceptionnée permet d'extraire des informations sur une ou plusieurs caractéristiques (e.g. présence d'un individu) sous la forme d'une matrice.

En particulier, le traitement 250 pourra comporter l'utilisation de plusieurs filtres d'échelles différentes de façon à obtenir au moins une matrice Mx1, Mx2, Mx3, Mx13 correspondant au traitement de l'image.

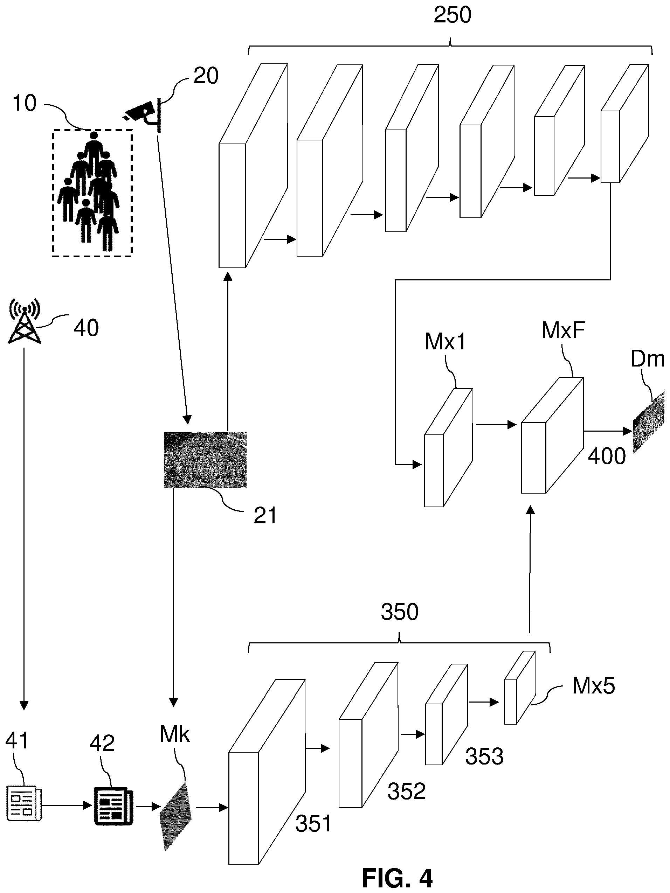

Des solutions proposées dans le cadre de la présente invention sont illustrées aux figures 4, 5 et 6.

Des images d'entrée 21 d'une foule 10 sont capturées par un dispositif de capture d'image 20 et des données d'identification 41 issues de la foule 10 sont capturées par un capteur réseau 40.

Une ou plusieurs de ces images d'entrée 21 ainsi que les données d'identification 41 ou directement un masque d'identification Mk sont ensuite traitées 250, 350 pour obtenir une estimation de la densité de la foule sous la forme d'une carte de densité Dm.

En particulier, **la figure 4** illustre un réseau de neurones comportant deux colonnes en parallèle. Une première colonne est en charge du traitement de l'image d'entrée 21 tandis qu'une seconde colonne est en charge du traitement des données d'identification 41 ou plus spécifiquement du masque d'identification Mk.

Chaque colonne peut avantageusement utiliser des filtres de différentes tailles correspondant aux différentes échelles de têtes modélisées dans les cartes de densité. Chaque colonne peut avantageusement correspondre à un sous réseau de neurones.

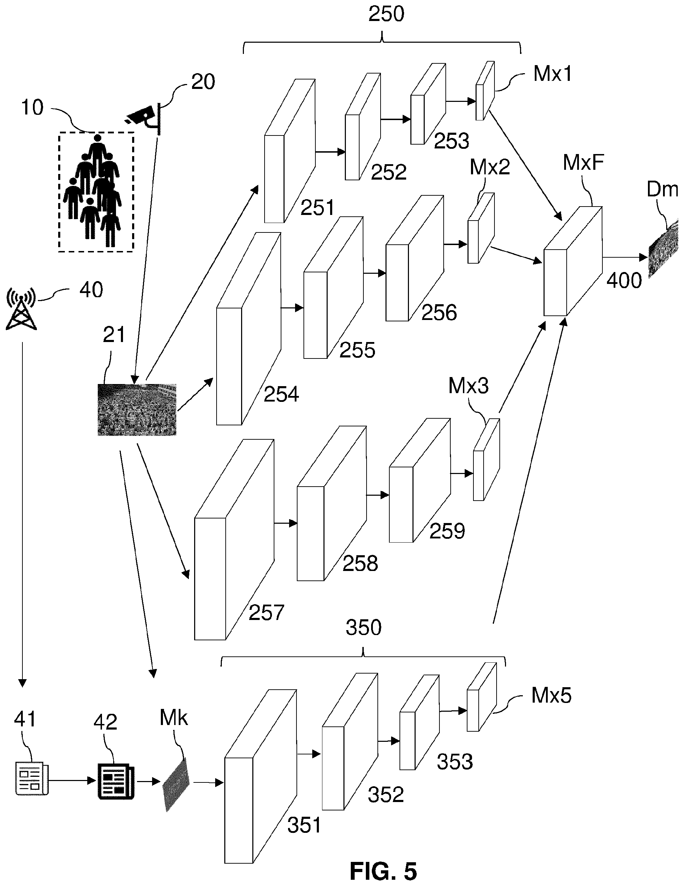

Dans un mode de réalisation, le réseau de neurones multiéchelles utilisé dans le cadre de l'invention comporte au moins deux couches de traitement convolutif dédiées au traitement 250 de l'image réceptionnée, de préférence au moins trois couches et au moins une couche de traitement convolutif dédiée au traitement 350 du masque d'identification Mk généré. Cela est en particulier illustré à **la figure 5** qui représente un réseau de neurones comportant quatre colonnes parallèles. Trois colonnes sont en charge du traitement de l'image d'entrée 21 tandis qu'une quatrième colonne est en charge du traitement des données d'identification 41 ou plus spécifiquement du masque d'identification Mk.

Chacune des colonnes en charge du traitement de l'image d'entrée 21 peut avantageusement utiliser des filtres de différentes tailles correspondant aux différentes échelles de têtes modélisées dans les cartes de densité. Par exemple, une série de couches convolutives 257, 258, 259 peut utiliser un filtre de 9x9, tandis qu'une série de couches convolutives 254, 255, 256 peut utiliser un filtre de 7x7, et enfin une dernière série de couches convolutives 251, 252, 253 dédié au traitement de l'image d'entrée 21 peut utiliser un filtre de 5x5.

Dans un mode de réalisation particulier, le premier sous-réseau utilise des noyaux de convolution de taille $9 \times 9$, le deuxième sous-réseau utilise des noyaux de convolution de taille $5 \times 5$, et le troisième sous-réseau utilise des noyaux de convolution de taille 7x7. Après que la même image d'entrée est entrée dans les trois sous-réseaux, l'image d'entrée est soumise à trois convolutions différentes. L'image d'entrée est d'abord convoluée une fois par un noyau de convolution avec une taille de 9 multipliée par 9 dans un premier sous-réseau, puis convoluée trois fois par des noyaux de convolution de taille $7 \times 7$ et regroupée deux fois ; dans un deuxième sous-réseau, l'image d'entrée est d'abord convoluée une fois par un noyau de convolution de la taille de 7 multipliée par 7, puis convoluée trois fois par des noyaux de convolution de taille $5 \times 5$ et regroupée deux fois ; dans un troisième sous-réseau l'image d'entrée est d'abord convolutée avec un noyau de convolution de $5 \times 5$, puis convolutée trois fois par des noyaux de convolution de taille $3 \times 3$ et regroupée deux fois. Après que les images ont été soumises à quatre étapes de convolution et à deux étapes de mise en commun dans trois sous-réseaux, trois cartes de caractéristiques ou matrice sont générées Mx1, Mx2, Mx3.

L'utilisation de plusieurs colonnes présentant chacune un filtre différent permet d'améliorer la justesse de la quantification. En effet, les images contiennent généralement des têtes de tailles très différentes, par conséquent, les filtres avec des champs récepteurs de taille variable sont susceptibles de mieux capturer les caractéristiques de la densité de foule sur des niveaux de profondeur importants.

Ainsi, avantageusement, le réseau de neurones utilisé dans le cadre de l'invention comporte au moins deux colonnes, ou sous réseau de neurones, présentant des filtres de différentes tailles.

En particulier, le réseau de neurones contient au moins trois colonnes en parallèle dédiées au traitement de l'image d'entrée 21. Toutes les colonnes pourront être composées à l'identique et chacune utiliser des filtres de différentes tailles correspondant par exemple aux différentes échelles de têtes modélisées dans les cartes de densité.

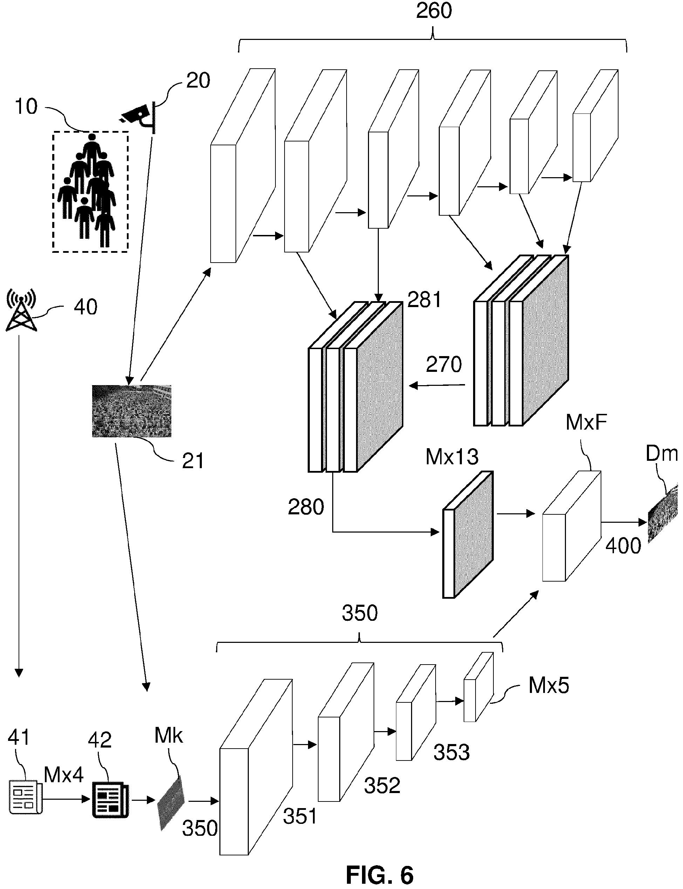

Un mode de réalisation alternatif est illustré à la **figure 6.**

Dans ce mode de réalisation, une première colonne est en charge du traitement de l'image d'entrée 21 tandis qu'une seconde colonne est en charge du traitement des données d'identification 41 ou plus spécifiquement du masque d'identification Mk.

Néanmoins, les traitements associés à la première colonne permettent d'augmenter la justesse de la prédiction par rapport à une colonne simple monoéchelle.

L'image d'entrée 21 est sous-échantillonnée 260 à travers d'une série de couches convolutives avec des noyaux convolutifs par exemple de 3x3, 5x5 ou 7x7. En outre, les matrices générées par convolution sont soumises à une ou plusieurs fusions 270, 280 d'entités pour générer une matrice Mx13 d'images 281.

Comme illustré toujours aux figures 2, 3, 4, 5 et 6, le procédé selon l'invention comporte l'acquisition d'un masque d'identification Mk. Cette acquisition peut être précédée par une réception de données d'identification 41 de dispositifs communicants mobiles 30 acquises par au moins un capteur réseau 40. Les données d'identification 41 pourront par exemple faire l'objet d'un traitement d'anonymisation de façon à générer des données d'identification anonymisées 42 ou pseudonymisées.

En outre, le procédé 1 d'estimation de la densité d'une foule 10 selon l'invention comporte **un traitement 350 d'un masque d'identification Mk** comportant des données de dispositifs communicants mobiles 30, par un sous réseau de neurones du réseau de neurones multiéchelles entrainé. Ce sous réseau de neurones peut être ou non un réseau de neurones multiéchelles. Ce traitement 250 de l'image réceptionnée peut être réalisé par une infrastructure informatique, dédiée ou non à un procédé selon l'invention.

Comme cela a déjà été présenté, le procédé selon l'invention permet d'intégrer des données très différentes de façon à obtenir une estimation améliorée de la densité d'une foule. Dans ce contexte, les données d'identification 41 et en particulier les données du masque d'identification Mk seront intégrées dans une colonne du réseau de neurones multiéchelles utilisé dans le cadre de la présente invention.

En particulier, dans le cadre de la présente invention, il peut y avoir utilisation des IMSI des téléphones portables des individus présents dans la foule ou plus largement des données d'identification des dispositifs de communication utilisés par la foule.

Cela permet d'améliorer l'estimation et en particulier de pallier au problème des variations d'échelles dans la profondeur de champ d'une image.

De la même façon que le traitement 250 de l'image, le traitement 350 du masque d'identification Mk pourra comporter l'utilisation de plusieurs filtres d'échelles différentes 351, 352, 353 de façon à obtenir au moins une matrice Mx5 correspondant aux données d'identification traitées. Ce traitement sera avantageusement réalisé par une colonne, un sous réseau de neurones dédié.

En particulier, cette colonne pourra prendre en entrée le masque d'identification Mk qui intégrera des positions d'une liste IMSI en 2d (x,y) sur une image, de préférence sur l'image d'entrée 21. Le premier filtre de convolution reprend une taille moyenne de filtre utilisé pour le traitement de l'image d'entrée 21, c'est-à-dire 7x7. Puis le traitement du masque d'identification Mk fonctionne de préférence comme le traitement de l'image d'entrée 21, par convolution fonctionne à l'identique.

Ainsi, un réseau de neurones utilisable dans le cadre de la présente invention pourra comporter au moins deux colonnes en parallèle. Chaque colonne utilise des filtres de différentes tailles correspondant de préférence aux différentes échelles de têtes modélisées dans les cartes de densité.

Ces réseaux de neurones, pouvant être de préférence des réseaux de neurones parallèles pourront générer des matrices Mx1, Mx2, Mx3, Mx4, Mx5 qui pourront ensuite être fusionnées de façon à former éventuellement une matrice finale MxF puis une carte de densité Dm.

Dans la présente invention, un réseau de neurones multiéchelles, de préférence un réseau neuronal convolutif multicolonnes est entrainé. Alternativement, pourraient être utilisés d'autres algorithmes de réseau de neurones configuré pour traiter les images d'entrée selon plusieurs échelles d'une part et par l'intermédiaire de tuiles d'autre part. Les réseaux de neurones utilisés pourront être des réseaux de neurones profonds ou des réseaux de neurones profonds convolutifs.

Le procédé d'estimation de la densité d'une foule 10 selon l'invention comporte également une étape de fusion 400 de l'au moins une matrice Mx1, Mx2, Mx3, Mx13 correspondant au traitement de l'image d'entrée 21 et de l'au moins une matrice Mx5 correspondant au traitement du masque d'identification Mk.

Autrement dit, les cartes de caractéristique ou matrices Mx1, Mx2, Mx3, Mx13, Mx5 générées par chacune de ces méthodes sont reliées entre elles pour former une carte d'entité totale ou matrice finale MxF, puis la carte d'estimation de densité Dm. Par exemple, la densité de la population peut être obtenue par convolution avec une taille de noyau de convolution de $1 \times 1$.

La fusion peut être réalisée par le réseau de neurones multiéchelles entrainé et en particulier par un sous réseau de neurones dédié. Une telle fusion pourra par certain aspect s'apparenter à une surjection des éléments de la matrice Mx5 correspondant au traitement du masque d'identification Mk avec les éléments de l'au moins une matrice Mx1, Mx2, Mx3, Mx13 correspondant au traitement de l'image d'entrée 21.

Cette fusion permet d'obtenir une carte de densité Dm de la foule 10 dont la densité est à estimer. En particulier, les matrices d'images et/ou du masque d'identification Mk sont reliées entre elles pour former une matrice finale MxF, puis la carte d'estimation de densité Dm est déterminée à partir de la matrice finale MxF.

Plusieurs fusions peuvent être utilisées telles qu'une fusion naïve, une fusion par chevauchement ou une fusion par apprentissage.

De façon préférée, la fusion 400 est réalisée par un sous réseau de neurones dédié. Elle correspond donc à une fusion par apprentissage. Une telle étape permet d'améliorer la justesse de l'estimation. En effet, il y aura, via la fusion, une exploitation de la complémentarité des informations traitées.

La présente invention a été détaillée avec comme exemple la fusion de données provenant d'image d'entrée et de données provenant de masque d'identification. Néanmoins, l'invention pourrait également s'appliquer avec d'autres données complémentaires venant encore renforcer la prédiction. Ainsi, un procédé selon l'invention pourra comporter une **étape de réception 500 de données complémentaires et leur traitement par le réseau de neurones multiéchelles entraîné.**

Une fois la carte de densité générée, le procédé selon l'invention pourra comporter une **étape d'analyse 600 de la carte de densité de la foule.**

Les analyses de la carte de densité pourront être très diverses et, à partir de la carte de densité de la foule, répondre à des problématiques classiques de suivi de l'évolution d'une valeur de densité, d'identification d'augmentation brusque de la densité de personnes en fonction du temps dans au moins une partie de l'image, de détermination d'une quantité de personnes dans l'image ou encore de détermination de distance de sécurité entre personnes. Ainsi, la présente invention permettra de mesurer et d'avertir par rapport à la densité des personnes dans une zone ou à un point donnée d'une part et de mesurer les déplacements de ces personnes d'autre part. La présente invention permettra donc de calculer des tendances dans les déplacements de façon à anticiper un risque.

En outre, la présente invention concerne également des étapes ultérieures de traitement de la carte de densité de la foule permettant d'accéder à des données jusqu'alors inaccessibles via les méthodes classiques d'estimation de la densité de foule telles que :

- la détermination d'une quantité de personnes ou d'une densité de personne en fonction de la nationalité de l'opérateur des dispositifs communicants mobiles 30 utilisés ;

- la détermination d'une quantité de personnes ou d'une densité de personne en fonction de l'identité de l'opérateur (par. ex. grâce au MSISDN) des dispositifs communicants mobiles 30 utilisés ;

La présente invention sera donc adaptée à l'utilisation d'informations liée à un opérateur (par. ex. IMSI ou MSiSDN) pour cibler certains individus. Ainsi, sur la base de ces données il sera possible de déterminer si l'individu est résident ou visiteur, sa nationalité probable.

Ainsi, l'invention pourra trouver une utilité particulière dans le cadre de marketing ciblé pouvant s'appuyer sur l'opérateur et l'origine du contrat opérateur. En outre, avantageusement, étant donné que la position de l'individu sera connue, il est possible dans le cadre de la présente invention d'envoyer une information spécifique sur un dispositif média qui pourra être le dispositif mobile communicant mais également des dispositif communicants positionnés dans l'environnement immédiat de l'utilisateur de façon à aisément lui fournir une information spécifique.

De tels applications peuvent être particulièrement utiles dans un contexte de sécurisation d'un lieu, tel qu'un aéroport ou un autre lieu public.

En outre, dans un contexte de pandémie, la présente invention peu être utilisée pour garantir le respect de distance de sécurité et des transmission d'informations ciblée sur des risques de contamination ou des mesures à prendre pour réduire lesdits risques de contamination. En effet, les individus pourront être dirigés en fonction du contexte de façon à renforcer leur sécurité.

En outre, la prise en compte du masque d'identification peut également permettre de faire une corrélation entre des paramètres calculés ou des circonstances identifiées et des identifiants de dispositifs communicants mobiles. Ainsi, lorsque l'étape d'analyse du procédé selon l'invention identifiera une situation correspondant à une situation prédéterminée alors il pourra envoyer un message à un client tiers (tel qu'un opérateur) ou directement au dispositif communicants mobiles impliqués.

Dans le cadre d'une transmission à un client tiers, par exemple l'opérateur d'un dispositif communicant mobile impliqué, cette transmission pourra comporter des données sur l'IMSI et la situation identifiée avec éventuellement le lieu et l'heure.

Dans le cadre d'une transmission à un dispositif communicant mobile impliqué, cette transmission pourra comporter des données sur la situation identifiée avec éventuellement le lieu et l'heure.

Les situations prédéterminées pourront par exemple correspondre à un mouvement de foule potentiellement dangereux, un risque d'attentat, une densité trop importante propice à une transmission de virus,. Ces situations prédéterminées ainsi que les valeurs de paramètres permettant de les identifier pourront être stockées dans la mémoire du dispositif informatique 50.

Ainsi, le procédé peut comporter une étape de communication 700 avec un ou plusieurs dispositifs communicants mobiles 30 utilisés par des individus de la foule 10.

Par exemple, le procédé pourra comporter une étape de transmission de données de proximité calculées à certains dispositifs communicants mobiles 30.

Les performances de la présente invention ont été comparées à celle d'un autre procédé d'estimation de densité d'une foule utilisant également un réseau de neurones multiéchelles entrainé, mais ne prenant pas en compte de masque d'identification selon l'invention.

La comparaison a été réalisée après un entrainement à hauteur de 1050 époques sur la base de 16 images annotées.

Tableau 1

|  | Epoques | Prédiction | Valeur réelle |
|---|---|---|---|
| Sans masque d'identification (référence - Zingying et.al 2016) | 476 | 2023 | 2681 |
| Avec masque d'identification (invention) | 341 | 2581 | 2681 |

Le tableau 1 montre bien que le modèle a été largement amélioré par l'inclusion d'un traitement d'un masque d'identification.

Comme décrit, les modes de réalisation présentés ici fournissent des techniques pour estimer la densité d'une foule. Dans le cadre de ce procédé sont non seulement prises en compte des données d'images provenant de dispositif de capture d'image, mais également un masque d'identification comportant des données d'identification de dispositif communicant mobile positionné spatialement, de préférence dans un référentiel correspondant à l'image d'entrée. Avantageusement, cette approche permet d'améliorer la justesse des prédictions sans augmenter significativement le temps de calcul ou la durée d'entrainement.

En outre, cela donne accès à de nouvelles combinaisons de données permettant de faire des alertes ciblées à des individus.

En conséquence, les modes de réalisation fournissent un procédé d'estimation de la densité d'une foule plus efficace que les procédés existants.

Bien que ce qui précède concerne des modes de réalisation de la présente invention, d'autres modes de réalisation de l'invention peuvent être conçus sans s'écarter de sa portée de base, et sa portée est déterminée par les revendications qui suivent.

Comme cela sera apprécié par l'homme de l'art, des aspects de la présente invention peuvent être réalisés en tant que dispositif, système, procédé ou produit de programme d'ordinateur (i.e. programme informatique). En conséquence, des aspects de la présente invention peuvent prendre la forme d'un mode de réalisation entièrement matériel, d'un mode de réalisation entièrement logiciel (comprenant un micrologiciel, un logiciel résident, un microcode, etc.) ou d'un mode de réalisation particulier tel que comme un "circuit", "module" ou "système". En outre, des aspects de la présente invention peuvent prendre la forme d'un produit de programme d'ordinateur incorporé dans un ou plusieurs supports lisibles par ordinateur ayant un code de programme lisible par ordinateur incorporé sur celui-ci.

En particulier, les étapes du procédé d'estimation de la densité d'une foule selon l'invention décrite précédemment peuvent prendre la forme d'un programme informatique.

Ainsi, **selon un autre aspect,** l'invention porte sur **un programme informatique** (e.g. un programme d'ordinateur) comprenant des instructions de code de programme pour l'exécution des étapes d'un procédé selon l'invention lorsque ledit programme informatique est exécuté sur un dispositif informatique tel qu'un ordinateur. Un code de programme informatique pour effectuer des opérations pour des aspects de la présente invention peut être écrit dans n'importe quelle combinaison d'un ou plusieurs langages de programmation, y compris un langage de programmation orienté objet tel que Java, C ++ ou similaire, le langage de programmation "C" ou des langages de programmation similaires, un langage de script tel que Perl, ou des langages similaires, et/ou des langages fonctionnels tels que Meta Langage.

Le code de programme peut s'exécuter entièrement sur l'ordinateur d'un utilisateur, en partie sur l'ordinateur d'un utilisateur et en partie sur un ordinateur distant ou entièrement sur l'ordinateur ou le serveur distant. Dans ce dernier scénario, l'ordinateur distant peut être connecté à l'ordinateur d'un utilisateur par tout type de réseau, y compris un réseau local (LAN) ou un réseau étendu (WAN).

Ces instructions de programme d'ordinateur peuvent être stockées sur un support lisible par ordinateur pouvant diriger un dispositif informatique (e.g. ordinateur, serveur...), de sorte que les instructions stockées dans le support lisible par ordinateur produisent un dispositif informatique configuré pour mettre en oeuvre l'invention.

De même, l'invention porte sur un **support informatique** sur lequel est mémorisé un programme informatique selon l'invention. Toute combinaison d'un ou plusieurs supports lisibles par ordinateur peut être utilisée. Dans le contexte de ce document, un support lisible par ordinateur peut être n'importe quel support tangible qui peut contenir, ou stocker un programme à utiliser par ou en relation avec un système d'exécution d'instructions, appareil ou dispositif. Un support lisible par ordinateur peut être, par exemple, mais sans s'y limiter, un système, appareil ou dispositif électronique, magnétique, optique, électromagnétique, infrarouge ou semi-conducteur, ou toute combinaison appropriée de ce qui précède. Des exemples plus spécifiques (une liste non exhaustive) du support de stockage lisible par ordinateur comprendraient : un disque dur, une mémoire vive (RAM).

**Selon un autre aspect,** l'invention porte sur un **dispositif informatique** 50 configuré pour estimer la densité d'une foule, en particulier une infrastructure informatique.

En particulier, le dispositif informatique 50 pourra être configuré pour exécuter une ou plusieurs des étapes d'un procédé selon l'invention.

Pour cela, le dispositif informatique 50 peut comprendre un ou plusieurs processeurs configurés pour exécuter des instructions stockées par un support lisible par ordinateur pour effectuer diverses opérations client, telles que les entrées / sorties, la communication, le traitement des données, etc. Le dispositif informatique 50 comprend une ou plusieurs interfaces réseau à travers desquelles elle peut établir des connexions sans fil ou câblées à un ou plusieurs réseaux, tels que le réseau internet. Le dispositif informatique 50 exécute également des applications, par exemple, un client d'accès à internet ou encore des serveurs virtuels de calcul.

Ainsi, la présente invention propose tous les moyens nécessaires à une meilleure estimation de la densité d'une foule. En particulier, grâce à la prise en compte de différentes échelles et à la fusion de caractéristiques provenant d'une image d'entrée et d'un masque d'identification, il a été possible pour la demanderesse d'améliorer efficacement la précision de l'estimation de la densité de la foule.

En outre, cela a ouvert la voie à de nouvelles utilisations de ces estimations de densité notamment en combinaison avec la démocratisation des dispositifs communicants mobiles.

**Revendications**

1. Procédé (1) d'estimation de la densité d'une foule (10) utilisant des dispositifs communicants mobiles (30), mis en oeuvre par un dispositif informatique (50), ledit procédé comprenant l'utilisation d'un réseau de neurones multiéchelles entrainé pour produire une carte de densité (Dm) de la foule (10), ledit réseau de neurones multiéchelles entrainé comprenant au moins deux sous réseaux de neurones, ledit procédé comportant les étapes suivantes :

   - Réception (200) d'au moins une image d'entrée (21) générée par un dispositif de capture d'image (20) comportant la foule (10) dont la densité est à estimer ;
   - Traitement (250) de l'image d'entrée (21), par au moins un sous réseau de neurones du réseau de neurones multiéchelles entrainé, ledit traitement (250) comportant l'utilisation de plusieurs filtres d'échelles différents de façon à obtenir au moins une matrice (Mx1, Mx2, Mx3) correspondant au traitement de l'image d'entrée (21) à différentes échelles ;
   - Acquisition (300) d'un masque d'identification (Mk) comportant des données d'identification des dispositifs communicants mobiles (30) positionnées en fonction de coordonnées spatiales desdits dispositifs communicants mobiles (30) ;
   - Traitement (350) du masque d'identification (Mk), par au moins un sous réseau de neurones du réseau de neurones multiéchelles entrainé, de façon à obtenir au moins une matrice (Mx5) correspondant au traitement des données d'identification des dispositifs communicants mobiles (30) ;
   - Fusion (400), par le réseau de neurones multiéchelles entrainé, de l'au moins une matrice (Mx1, Mx2, Mx3) correspondant au traitement de l'image d'entrée (21) et de l'au moins une matrice (Mx5) correspondant au traitement des données d'identification de dispositifs communicants mobiles (30) de façon à obtenir une carte de densité (Dm) de la foule (10) dont la densité est à estimer.

2. Procédé (1) d'estimation de la densité d'une foule (10) selon la revendication 1, **caractérisé en ce que** l'acquisition (300) du masque d'identification (Mk) comporte les étapes suivantes :

   - Réception (301) de données d'identification de dispositifs communicants mobiles (30) acquises par au moins un capteur réseau (40) ;
   - Calcul (310) de la position des dispositifs communicants mobiles (30) à partir de données de communication provenant de l'au moins un capteur réseau (40) ;
   - Réception (320) de valeurs de position du dispositif de capture d'image (20), par exemple des valeurs de distance entre le dispositif de capture d'image (20) et le ou les capteurs réseau (40) ;
   - Transposition (330) de la position calculée des dispositifs communicants mobiles (30) sur un référentiel spatial correspondant à l'image d'entrée (21), en fonction des valeurs de position reçues ; et
   - Génération (340) du masque d'identification (Mk) comportant les données d'identification des dispositifs communicants mobiles (30) positionnées en fonction de la position calculée desdits dispositifs communicants mobiles (30).

3. Procédé (1) d'estimation de la densité d'une foule (10) selon la revendication 1, **caractérisé en ce que** l'acquisition (300) du masque d'identification (Mk) comporte une réception, par le dispositif informatique (50), du masque d'identification (Mk).

4. Procédé (1) d'estimation de la densité d'une foule (10) selon l'une quelconque des revendications 1 à 3, **caractérisé en ce que** le réseau de neurones multiéchelles entrainé est un réseau de neurones convolutif entrainé comportant au moins une couche de traitement convolutif dédiée au traitement (250) de l'image d'entrée (21) et au moins une couche de traitement convolutif dédiée au traitement (350) du masque d'identification (Mk).

5. Procédé (1) d'estimation de la densité d'une foule (10) selon la revendication 4, **caractérisé en ce que** le réseau de neurones comporte au moins trois couches de traitement convolutif dédiée au traitement (250) de l'image d'entrée (21).

6. Procédé (1) d'estimation de la densité d'une foule (10) selon l'une des revendications 4 ou 5, **caractérisé en ce que** chaque couche de traitement convolutif comporte des étapes de convolution, des étapes de compression et des étapes de correction.

7. Procédé (1) d'estimation de la densité d'une foule (10) selon l'une quelconque des revendications 1 à 6, **caractérisé en ce qu'**il comporte une étape de détermination d'une quantité de personnes à partir de la carte de densité (Dm) de la foule (10).

8. Procédé (1) d'estimation de la densité d'une foule (10) selon l'une quelconque des revendications 1 à 7, **caractérisé en ce qu'**il comporte une étape d'identification d'une augmentation brusque de la densité de personnes en fonction du temps dans au moins une partie de l'image.

9. Procédé (1) d'estimation de la densité d'une foule (10) selon l'une quelconque des revendications 1 à 8, **caractérisé en ce qu'**il comporte une étape d'identification d'au moins une partie de l'image dans laquelle une distance de sécurité prédéterminée entre individus n'est pas respectée.

10. Procédé (1) d'estimation de la densité d'une foule (10) selon l'une quelconque des revendications 1 à 9, **caractérisé en ce qu'**il comporte une étape de détermination d'une quantité de personnes en fonction de la nationalité de l'opérateur des dispositifs communicants mobiles (30) utilisés.

11. Procédé (1) d'estimation de la densité d'une foule (10) selon l'une quelconque des revendications 1 à 10, **caractérisé en ce qu'**il comporte une étape d'identification de dispositifs communicants mobiles associés à une circonstance prédéterminée et une étape de transmission de données d'identification de ces dispositifs communicants mobiles à un client tiers.

12. Procédé (1) d'estimation de la densité d'une foule (10) selon l'une quelconque des revendications 1 à 11, **caractérisé en ce qu'**il comporte une étape d'apprentissage (100) pour l'entrainement du réseau de neurones multiéchelles incluant une rétropropagation d'un gradient d'erreur et une descente de gradient.

13. Produit programme d'ordinateur comprenant des instructions de code de programme permettant l'exécution des étapes d'un procédé selon l'une quelconque des revendications 1 à 12 lorsque ledit produit programme d'ordinateur est exécuté sur un dispositif informatique.

14. Dispositif informatique (50) pour l'estimation de la densité d'une foule (10) utilisant des dispositifs communicants mobiles (30), ledit dispositif informatique (50) comportant un ou plusieurs processeurs configurés pour utiliser un réseau de neurones multiéchelles entrainé pour produire une carte de densité (Dm) de la foule (10) à partir d'une image, ledit réseau de neurones multiéchelles entrainé comprenant au moins deux sous réseau de neurones, lesdits un ou plusieurs processeurs étant configurés pour :

- Réceptionner au moins une image d'entrée (21) comportant la foule (10) dont la densité est à estimer ;
- Traiter l'image d'entrée (21), par au moins un sous réseau de neurones du réseau de neurones multiéchelles entrainé, le traitement comportant l'utilisation de plusieurs filtres d'échelles différents de façon à obtenir au moins une matrice (Mx1, Mx2, Mx3) correspondant au traitement de l'image d'entrée (21) à différentes échelles ;
- Acquérir un masque d'identification (Mk) comportant des données d'identification des dispositifs communicants mobiles (30) positionnées en fonction de coordonnées spatiales desdits dispositifs communicants mobiles (30) ;
- Traiter le masque d'identification (Mk), par au moins un sous réseau de neurones du réseau de neurones multiéchelles entrainé, de façon à obtenir au moins une matrice (Mx5) correspondant au traitement des données d'identification des dispositifs communicants mobiles (30) ; et
- Fusionner, à partir du réseau de neurones multiéchelles entrainé, l'au moins une matrice (Mx1, Mx2, Mx3) correspondant au traitement de l'image d'entrée (21) et de l'au moins une matrice (Mx5) correspondant au traitement des données d'identification de dispositifs communicants mobiles (30) de façon à obtenir la carte de densité (Dm) de la foule (10) dont la densité est à estimer.

**Patentansprüche**

1. Verfahren (1) zum Schätzen der Dichte einer Menschenansammlung (10) unter Verwendung von Mobilkommunikationsvorrichtungen (30), das durch eine Rechenvorrichtung (50) implementiert wird, das Verfahren umfassend die Verwendung eines trainierten Netzes von mehrskaligen Neuronen zum Erzeugen eine Dichtekarte (Dm) der Menschenansammlung (10), das trainierte Netz von mehrskaligen Neuronen umfassend mindestens zwei Teilnetze von Neuronen, wobei das Verfahren die folgenden Schritte aufweist:

   - Empfangen (200) von mindestens einem Eingabebild (21), das durch eine Bildaufnahmevorrichtung (20) generiert wird, das die Menschenansammlung (10) umfasst, deren Dichte geschätzt werden soll;
   - Verarbeiten (250) des Eingabebildes (21), durch mindestens ein Teilnetz von Neuronen des trainierten Netzes von mehrskaligen Neuronen, wobei das Verarbeiten (250) die Verwendung von mehreren Filtern unterschiedlicher Skalen aufweist, um mindestens eine Matrix (Mx1, Mx2, Mx3) zu erhalten, die dem Verarbeiten des Eingabebildes (21) auf unterschiedlichen Skalen entspricht;
   - Erfassen (300) einer Identifikationsmaske (Mk), die Identifikationsdaten der Mobilkommunikationsvorrichtungen (30) aufweist, die in Abhängigkeit von Raumkoordinaten der Mobilkommunikationsvorrichtungen (30) positioniert sind;
   - Verarbeiten (350) der Identifikationsmaske (Mk), durch mindestens ein Teilnetz von Neuronen des trainierten Netzes von mehrskaligen Neuronen, um mindestens eine Matrix (Mx5) zu erhalten, die dem Verarbeiten der Identifikationsdaten der Mobilkommunikationsvorrichtungen (30) entspricht;
   - Zusammenführen (400), durch das trainierte Netz von mehrskaligen Neuronen, der mindestens einen Matrix (Mx1, Mx2, Mx3), die dem Verarbeiten des Eingabebildes (21) entspricht, und der mindestens einen Matrix (Mx5), die dem Verarbeiten der Identifikationsdaten der Mobilkommunikationsvorrichtungen (30) entspricht, um eine Dichtekarte (Dm) der Menschenansammlung (10) zu erhalten, deren Dichte geschätzt werden soll.

2. Verfahren (1) zum Schätzen der Dichte einer Menschenansammlung (10) nach Anspruch 1, **dadurch gekennzeichnet, dass** das Erfassen (300) der Identifikationsmaske (Mk) die folgenden Schritte aufweist:

   - Empfangen (301) von Identifikationsdaten von Mobilkommunikationsvorrichtungen (30), die durch mindestens einen Netzsensor (40) erfasst werden;
   - Berechnen (310) der Position der Mobilkommunikationsvorrichtungen (30) ausgehend von Kommunikationsdaten, die von mindestens einem Netzsensor (40) stammen;
   - Empfangen (320) von Positionswerten der Bildaufnahmevorrichtung (20), zum Beispiel der Distanzwerte zwischen der Bildaufnahmevorrichtung (20) und dem oder den Netzsensoren (40);
   - Übertragen (330) der berechneten Position der Mobilkommunikationsvorrichtungen (30) auf ein Raumbezugssystem, das dem Eingabebild entspricht (21), in Abhängigkeit von den empfangenen Positionswerten; und
   - Generieren (340) der Identifikationsmaske (Mk), die die Identifikationsdaten der Mobilkommunikationsvorrichtungen (30) aufweist, die in Abhängigkeit von der berechneten Position der Mobilkommunikationsvorrichtungen (30) positioniert sind.

3. Verfahren (1) zum Schätzen der Dichte einer Menschenansammlung (10) nach Anspruch 1, **dadurch gekennzeichnet, dass** das Erfassen (300) der Identifikationsmaske (Mk) ein Empfangen, durch die Rechenvorrichtung (50), der Identifikationsmaske (Mk) aufweist.

4. Verfahren (1) zum Schätzen der Dichte einer Menschenansammlung (10) nach einem der Ansprüche 1 bis 3, **dadurch gekennzeichnet, dass** das trainierte Netz von mehrskaligen Neuronen ein faltendes Netz von Neuronen ist, das mindestens eine Schicht zum faltenden Verarbeiten, die dem Verarbeiten (250) des Eingangsbildes (21) gewidmet ist, und mindestens eine Schicht zum faltenden Verarbeiten aufweist, die dem Verarbeiten (350) der Identifikationsmaske (Mk) gewidmet ist.

5. Verfahren (1) zum Schätzen der Dichte einer Menschenansammlung (10) nach Anspruch 4, **dadurch gekennzeichnet, dass** das neuronale Netz mindestens drei Schichten zum faltenden Verarbeiten umfasst, die dem Verarbeiten (250) des Eingangsbildes (21) gewidmet sind.

6. Verfahren (1) zum Schätzen der Dichte einer Menschenansammlung (10) nach einem der Ansprüche 4 oder 5, **dadurch gekennzeichnet, dass** jede Schicht zum faltenden Verarbeiten Faltungsschritte, Kompressionsschritte und Korrekturschritte aufweist.

7. Verfahren (1) zum Schätzen der Dichte einer Menschenansammlung (10) nach einem der Ansprüche 1 bis 6, **dadurch gekennzeichnet, dass** es einen Schritt eines Bestimmens einer Menge an Personen ausgehend von der Dichtekarte (Dm) der Menschenansammlung (10) aufweist.

8. Verfahren (1) zum Schätzen der Dichte einer Menschenansammlung (10) nach einem der Ansprüche 1 bis 7, **dadurch gekennzeichnet, dass** es einen Schritt eines Identifizierens eines plötzlichen Anstiegs der Personendichte in Abhängigkeit von der Zeit in mindestens einem Teil des Bildes aufweist.

9. Verfahren (1) zum Schätzen der Dichte einer Menschenansammlung (10) nach einem der Ansprüche 1 bis 8, **dadurch gekennzeichnet, dass** es einen Schritt des Identifizierens mindestens eines Teils des Bildes aufweist, in dem ein vorbestimmter Sicherheitsabstand zwischen Individuen nicht erfüllt ist.

10. Verfahren (1) zum Schätzen der Dichte einer Menschenansammlung (10) nach einem der Ansprüche 1 bis 9, **dadurch gekennzeichnet, dass** es einen Schritt des Bestimmens einer Menge an Personen in Abhängigkeit von der Nationalität des Bedieners der verwendeten Mobilkommunikationsvorrichtungen (30) aufweist.

11. Verfahren (1) zum Schätzen der Dichte einer Menschenansammlung (10) nach einem der Ansprüche 1 bis 10, **dadurch gekennzeichnet, dass** es einen Schritt des Identifizierens von Mobilkommunikationsvorrichtungen, die einem vorbestimmten Umstand zugeordnet sind, und einen Schritt eines Übermittelns von Identifikationsdaten dieser Mobilkommunikationsvorrichtungen an einen Dritt-Client aufweist.

12. Verfahren (1) zum Schätzen der Dichte einer Menschenansammlung (10) nach einem der Ansprüche 1 bis 11, **dadurch gekennzeichnet, dass** es einen Lernschritt (100) zum Trainieren des Netzes von mehrskaligen Neuronen aufweist, der eine Rückpropagierung eines Fehlergradienten und einen Gradientenabstieg einschließt.

13. Computerprogrammprodukt, umfassend Programmcodeanweisungen, die die Ausführung der Schritte eines Verfahrens nach einem der Ansprüche 1 bis 12 ermöglichen, wenn das Computerprogrammprodukt auf einer Rechenvorrichtung ausgeführt wird.

14. Rechenvorrichtung (50) zum Schätzen der Dichte einer Menschenansammlung (10) unter Verwendung von Mobilkommunikationsvorrichtungen (30), wobei die Rechenvorrichtung (50) einen oder mehrere Prozessoren aufweist, die zum Verwenden eines trainierten Netzes von mehrskaligen Neuronen zum Erzeugen einer Dichtekarte (Dm) der Menschenansammlung (10) ausgehend von einem Bild konfiguriert sind, das trainierte Netz von mehrskaligen Neuronen umfassend mindestens zwei Teilnetze von Neuronen, wobei der eine oder die mehreren Prozessoren konfiguriert sind zum:

- Empfangen mindestens eines Eingabebildes (21), das die Menschenansammlung (10) aufweist, deren Dichte geschätzt werden soll;
- Verarbeiten des Eingabebildes (21), durch mindestens ein Teilnetz von Neuronen des trainierten Netzes von mehrskaligen Neuronen, wobei das Verarbeiten die Verwendung von mehreren Filtern unterschiedlicher Skalen aufweist, um mindestens eine Matrix (Mx1, Mx2, Mx3) zu erhalten, die dem Verarbeiten des Eingabebildes (21) auf unterschiedlichen Skalen entspricht;
- Erfassen einer Identifikationsmaske (Mk) die Identifikationsdaten der Mobilkommunikationsvorrichtungen (30) aufweist, die in Abhängigkeit von Raumkoordinaten der Mobilkommunikationsvorrichtungen (30) positioniert sind;
- Verarbeiten der Identifikationsmaske (Mk), durch mindestens ein Teilnetz von Neuronen des trainierten Netzes von mehrskaligen Neuronen, um mindestens eine Matrix (Mx5) zu erhalten, die dem Verarbeiten der Identifikationsdaten der Mobilkommunikationsvorrichtungen (30) entspricht; und

- Zusammenführen, ausgehend von dem trainierten Netz von mehrskaligen Neuronen, der mindestens einen Matrix (Mx1, Mx2, Mx3), die dem Verarbeiten des Eingabebildes (21) entspricht, und der mindestens einen Matrix (Mx5), die dem Verarbeiten der Identifikationsdaten von Mobilkommunikationsvorrichtungen (30) entspricht, um die Dichtekarte (Dm) der Menschenansammlung (10) zu erhalten, deren Dichte geschätzt werden soll.

**Claims**

1. A method (1) for estimating the density of a crowd (10) using mobile communication devices (30), implemented by a computing device (50), said method comprising the use of a multiscale neural network trained to produce a density map (Dm) of the crowd (10), said trained multiscale neural network comprising at least two neural subnetworks, said method comprising the following steps:

   - receiving (200) at least one input image (21) generated by an image capturing device (20), the image comprising the crowd (10), the density of which is to be estimated;
   - processing (250) the input image (21) by the at least one neural subnetwork of the trained multiscale neural network, said processing step (250) comprising the use of several filters of different scales so as to obtain at least one matrix (Mx1, Mx2, Mx3) corresponding to the processing of the input image (21) at different scales;
   - acquiring (300) an identification mask (Mk) comprising identification data of the mobile communication devices (30), which data are positioned on the basis of spatial coordinates of said mobile communication devices (30);
   - processing (350) the identification mask (Mk) by at least one neural subnetwork of the trained multiscale neural network, so as to obtain at least one matrix (Mx5) corresponding to the processing of the identification data of the mobile communication devices (30);
   - merging (400), by the trained multiscale neural network, the at least one matrix (Mx1, Mx2, Mx3) corresponding to the processing of the input image (21) and the at least one matrix (Mx5) corresponding to the processing of the identification data of mobile communication devices (30) so as to obtain a density map (Dm) of the crowd (10), the density of which is to be estimated.

2. The method (1) for estimating the density of a crowd (10) according to claim 1, **characterized in that** acquiring (300) the identification mask (Mk) comprises the following steps:

   - receiving (301) identification data of mobile communication devices (30) acquired by at least one network sensor (40);
   - calculating (310) the position of the mobile communication devices (30) from communication data coming from the at least one network sensor (40);
   - receiving (320) position values of the image capturing device (20), for example distance values between the image capturing device (20) and the network sensor(s) (40);
   - transposing (330) the calculated position of the mobile communication devices (30) onto a spatial reference frame corresponding to the input image (21), on the basis of the received position values; and
   - generating (340) the identification mask (Mk) comprising the identification data of the mobile communication devices (30), which data are positioned on the basis of the calculated position of said mobile communication devices (30).

3. The method (1) for estimating the density of a crowd (10) according to claim 1, **characterized in that** acquiring (300) the identification mask (Mk) comprises receiving, by the computing device (50), the identification mask (Mk).

4. The method (1) for estimating the density of a crowd (10) according to any of claims 1 to 3, **characterized in that** the trained multiscale neural network is a trained convolutional neural network comprising at least one convolutional processing layer dedicated to processing (250) the input image (21) and at least one convolutional processing layer dedicated to processing (350) the identification mask (Mk).

5. The method (1) for estimating the density of a crowd (10) according to claim 4, **characterized in that** the neural network comprises at least three convolutional processing layers dedicated to processing (250) the input image (21).

6. The method (1) for estimating the density of a crowd (10) according to any of claims 4 or 5, **characterized in that** each convolutional processing layer comprises convolution steps, compression steps and correction steps.

7. The method (1) for estimating the density of a crowd (10) according to any of claims 1 to 6, **characterized in that** it comprises a step of determining an amount of people from the density map (Dm) of the crowd (10).

8. The method (1) for estimating the density of a crowd (10) according to any of claims 1 to 7, **characterized in that** it comprises a step of identifying an abrupt increase in the density of people on the basis of time in at least a portion of the image.

9. The method (1) for estimating the density of a crowd (10) according to any of claims 1 to 8, **characterized in that** it comprises a step of identifying at least a portion of the image in which a predetermined safety distance between individuals is not respected.

10. The method (1) for estimating the density of a crowd (10) according to any of claims 1 to 9, **characterized in that** it comprises a step of determining an amount of people on the basis of the nationality of the operator of the mobile communication devices (30) used.

11. The method (1) for estimating the density of a crowd (10) according to any of claims 1 to 10, **characterized in that** it comprises a step of identifying mobile communication devices associated with a predetermined circumstance and a step of transmitting identification data of these mobile communication devices to a thirdparty client.

12. The method (1) for estimating the density of a crowd (10) according to any of claims 1 to 11, **characterized in that** it comprises a learning step (100) for training the multiscale neural network, including retropropagation of an error gradient and a gradient descent.

13. A computer program product comprising program code instructions which enable the steps of a method according to any of claims 1 to 12 to be executed when said computer program product is executed on a computing device.

14. A computing device (50) for estimating the density of a crowd (10) using mobile communication devices (30), said computing device (50) comprising one or more processors configured to use a multiscale neural network trained to produce a density map (Dm) of the crowd (10) from an image, said trained multiscale neural network comprising at least two neural subnetworks, said one or more processors being configured to:

- receive at least one input image (21) comprising the crowd (10), the density of which is to be estimated;
- process the input image (21), by at least one neural subnetwork of the trained multiscale neural network, the processing step comprising the use of several filters of different scales so as to obtain at least one matrix (Mx1, Mx2, Mx3) corresponding to the processing of the input image (21) at different scales;
- acquire an identification mask (Mk) comprising identification data of the mobile communication devices (30), which data are positioned on the basis of spatial coordinates of said mobile communication devices (30);
- processing the identification mask (Mk), by at least one neural subnetwork of the trained multiscale neural network, so as to obtain at least one matrix (Mx5) corresponding to the processing of the identification data of the mobile communication devices (30); and
- merge, from the trained multiscale neural network, the at least one matrix (Mx1, Mx2, Mx3) corresponding to the processing of the input image (21) and the at least one matrix (Mx5) corresponding to the processing of the identification data of mobile communication devices (30) so as to obtain the density map (Dm) of the crowd (10), the density of which is to be estimated.

**FIG. 1**

1

100 — Apprentissage

200 — Réception d'au moins une image comportant une foule dont une densité est à estimer

250 — Traitement de l'image réceptionnée par un réseau de neurones multiéchelle entrainé

300 — Acquisition d'un masque d'identification comportant des données de dispositifs communicants mobiles en fonction de coordonnées spatiales

350 — Traitement du masque d'identification par le réseau de neurones multi-échelle

400 — Fusion d'une matrice correspondant au traitement de l'image d'entrée et d'au moins une matrice correspondant au traitement du masque d'identification

500 — Réception de données complémentaires

600 — Analyse de la carte de densité de la foule

700 — Communication avec un ou plusieurs dispositifs communicants utilisés par des individus de la foule

FIG. 2

300

301 — Réception de données d'identification de dispositifs communicants mobiles

310 — Calcul de la position de dispositifs communicants mobiles à partir de données de communication

320 — Réception de valeurs de position du dispositif de capture d'images

330 — Transposition de la position calculée des dispositifs communicants mobiles sur un référentiel spatial correspondant à l'image traitée

340 — Génération du masque d'identification comportant les données d'identification des dispositifs communicants mobiles positionnés en fonction de la position calculée

**FIG. 3**

**FIG. 4**

**FIG. 5**

FIG. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2019208365 A1

**Littérature non-brevet citée dans la description**

- **WAFAA M. SHALASH et al.** A mobile based crowd management system. *IJARCCE,* Juin 2017, vol. 6 (6
- **YINGYING ZHANG ; DESEN ZHOU ; SIQIN CHEN ; SHENGHUA GAO ; YI MA.** Single-Image Crowd Counting via Multi-Column Convolutional Neural Network. *2016 IEEE Conférence on Computer Vision and Pattern Recognition (CVPR),* 2016, 589-597
- **HAOYUE BAI et al.** Crowd Counting on Images with Scale Variation and Isolated Clusters. *2019 IEEE/CVF International Conférence on Computer Vision Workshop (ICCVW),* 2019